# EUROPEAN PATENT SPECIFICATION

(11) **EP 2 160 532 B1**
(45) Date of publication and mention of the grant of the patent: **25.04.2012**
(21) Application number: 07765789.8
(22) Date of filing: 04.07.2007
(51) Int. Cl.: F16K 3/08, F16K 11/074

(54) **SHEAR VALVE WITH VARIABLE FLOW RESISTANCE**
SCHERVENTIL MIT VARIABLEM STRÖMUNGSWIDERSTAND
VALVE DE CISAILLEMENT A RESISTANCE AU DEBIT VARIABLE

(43) Date of publication of application: 10.03.2010
(73) Proprietor: Agilent Technologies, Inc., Santa Clara CA 95051 (US)
(72) Inventor: DEHMER, Bernhard, 76437 Rastatt (DE)
(74) Representative: Dilg, Haeusler, Schindelmann Patentanwaltsgesellschaft mbH
(86) International application number: PCT/EP2007/056735
(87) International publication number: WO 2009/003519

(56) References cited:
- DE-C- 916 281
- US-A- 2 911 008

## Description

The present invention relates to a shear valve.

In fluidic systems, coupling devices are provided for switchably coupling fluidic devices.

A fluid flow control device is known from US 2,911,008 A. DE 916281 C1 discloses a device for switching off and controlling gas flow. The teaching of that document forms the preamble to claim 1.

In a high performance liquid chromatography -HPLC- system, a fluid has to be provided usually at controlled flow rates (e. g. in the range of microliters to milliliters per minute) and at high pressure (e.g. 100 - 2000 bar and even beyond). The fluid, also being referred to as mobile phase, may be pumped by a high pressure pump or towards a separation device. Initiated by the high pressure pump system, pressure gradually drops down to atmospheric pressure passing the chain of hydraulic communicating elements (e.g. fluid valves, sample loops, and capillary fluid connections) involved. The predominant pressure drop is expected to be at the separation device, or, in other words, the separation device forms the predominant fluid resistance within the system.

The separation device comprises a material, also being referred to as stationary phase, capable of separating different compounds of a sample being introduced into the mobile phase,. Such material, usually so-called beads, which may comprise silica gel, may be filled into a column tube of the separation device that might be coupled to further elements (e.g. a detector and a fraction collector).

Due to the high pressure in a HPLC system, e.g. in the range between 100 and 2000 bar, e.g. currently 400 - 1000 bar, fluids have to be regarded as being significantly compressible. If a switching transition connects a low pressurized volume to the high system pressure, the fluid flow will be interrupted to compensate for the compressibility of the low pressurized liquid path. All communicating pressurized liquid within the system and the pump capability for compensation acts as liquid source. Under certain conditions the flow within the separation device may even convert its direction for compensation. This hydraulic dynamic observable in pressure variation or pulsation might lead to damages e.g. in the stationary phase.

### DISCLOSURE

It is an object of the invention to provide an improved shear valve in particular suitable for use in an HPLC system. The object is solved by the independent claims. Further embodiments are shown by the dependent claims.

According to embodiments of the present invention, a shear valve is provided that might provide a fluid connection between a first fluidic device and a second fluidic device. The shear valve comprises a first shear valve member. The first shear valve member has a first port connectable to the first device, and a second port connectable to the second fluidic device. The shear valve further comprises a second shear valve member having a first fluid path. The second shear valve member is movable abutting to the first shear valve member. The first fluid path fluidly couples the first port with the second port dependent on a movement position of the second shear valve member with respect to the first shear valve member. The first fluid path is at least partly profiled with respect to the movement direction to provide a variable flow resistance being varied when moving the second shear valve member with respect to the first shear valve member within a certain region. The first fluid path further comprises a second section having a variable profile. The first and second sections are connected through a third section having a constant cross sectional area.

In a further embodiment, the first section form an end section of the first fluid path, in the following also being referred to as (first) profiled end section. The profiled end section thus shows a variable cross sectional area with respect to a direction of the movement; in other words, a depth and/or a width of the end section vary with respect to a direction of the movement.

In a further embodiment, the fluid path comprises a profiled end section that tapers toward the end of the path. Within the end section, the depth and/or the width can be formed to continuously decrease from a first end of the first profiled end section within the groove towards a second or free end forming an end of the path.

In a further embodiment, the length of the first profiled end section shows at least a twofold length or threefold length of the maximum width of the first profiled end section with respect to the direction of the movement.

Varying a flow resistance allows e.g. for variably (e.g. smoothly) increasing a flow rate or fluid pressure, for example a flow rate at a device (additionally) coupled to a fluid delivery system by means of the shear valve. Thereto, the second shear valve member might be (slowly) moved around a position, wherein the coupling between the first end section and e.g. the second port starts, or in other words, wherein the corresponding port opening starts interacting with the fluid path.

In an embodiment, the movement of the shear valve is controlled in dependency on a fluid parameter, e.g. a pressure or flow. In an embodiment, a pressure can be measured at the fluid delivery system coupled to the first port. The movement speed might be varied in dependency on the measured pressure. The movement might be temporarily stopped or even reversed (i.e. the direction of the movement is changed in opposite direction), if parameters of the measured pressure variations exceed certain values, e.g. an absolute minimum pressure and/or a maximum pressure, a pressure variation and/or a pressure gradient (i.e. a derivative of the pressure over time).

In order to provide a sealing between the shear valve members, one of the member surfaces can be arranged to be rigid with respect to the other member surface. The rigid member might e.g. be made of stainless steel or ceramics. This member might further be coated by diamond films, diamond like carbon (DLC), or other hard coatings applied to the surface, e.g. by physical or chemical vapor deposition (PVD or CVD), in order to further enhance the rigidness and to provide a hard surface.

In an embodiment, the surface of the second member comprising the fluid path(s) (e.g. the rotor member) is rigid and hard with respect to the first member comprising the ports (e.g. the stator member). This arrangement has the advantage that the complex structures (the fluid paths with varying profiles) are part of the hard valve member and thus keep their geometry over the time of operation, thus being substantially wear-resistant.

In case the sealing barrier of the valve member surface of the soft material is surface or areal expanded, the interaction of the corresponding port with the fluid path might start already (shortly) before the port opening of the first shear valve member physically covers the fluid path of the second shear valve member. Timing and course of such pre-interaction can depend e.g. on the material of the first and second shear valve member, e.g. the elasticity of the involved valve members the sealing pressure, and a molecular interaction between the valve members and the fluids involved.

The areas around the free end points of the movable fluid paths can be critical with respect to sealing and wear of the sealing, as these areas are moved many times across respective ports. As discussed above, the material of the member comprising the ports (e.g. the stator member) might be chosen of less hard or flexible material regarding the other member and might be partially pressed into the grooves of the second member. Due to the shear movements of the valve, this might lead to wear effects (e.g. abrasion or partial material degeneration) over the operation time.

In a further embodiment, a boundary line of the first end section on the second surface of the second shear valve member is chosen to have an elliptic or elliptic-like shape in the vicinity of the open end of the fluid path. Such elliptic like shape might be realized by constantly lifting a ball-like cutting head along the end section during a process of cutting the fluid path along a circular section. Correspondingly, the end section(s) can have a profile or dip angle below 90 degree. The (absolute value of the) maximum profile angle in the direction of movement over the whole length of the fluid path might be chosen preferably below 30 degree, more preferably below 15 degree, or even below 10 degree, e.g. 9 degree. Providing a beveled or smooth end of the fluid path, damages to the surface material originating from movements at high surface or areal pressure between the surfaces members can be reduced. A further advantageous effect of such beveled or smooth end can be an enhanced angular resolution of the fluid valve resistance.

In order to further enhance the angular resolution of the fluid valve resistance, the area of the sealing barrier can be expanded. In an embodiment, the surface of the first shear valve member has defined structures in the vicinity of the ports interfacing with the fluid path. Such structures might be realized as a defined structure roughness or a plurality of micro-channels around the ports or extending from these ports. Additionally or alternatively, a porous interface layer might be inserted close to or around the first port. Additionally or alternately, the surface of the first shear valve member might comprise a deflecting area in the vicinity of the ports.

In a further embodiment, the first shear valve member further comprises a third port, wherein the second shear valve member can be moved from a first state, wherein the first fluid path couples with the first port and the second port, to a second state wherein the first fluid path couple with the first port and the third port. The first fluid path can be formed as a groove, wherein the first and the second (end) sections are profiled, e.g. having tapered ends. This allows for smoothly coupling the first port alternately with the second and with the third port.

In a further embodiment the shear valve is arranged being part of an HPLC system comprising a separating device, having a stationary phase for separating compounds of a sample fluid comprised in a mobile phase, and a fluid delivery system adapted for driving a mobile phase through the separating device. The separating device can be e.g. a chromatographic column. The first port and the second port of the valve are coupled in-between a fluid passage between the fluid delivery system and the separating device for providing a fluid connection between the fluid delivery system and the separating device.

As being discussed in the introductory section, fluids in an HPLC system have to be regarded as being significantly compressible. Therefore, a switching process wherein a device, e.g. a sample loop containing the sample fluid, is coupled to the fluid delivery system, can lead to a high pressure or flow rate variation in such HPLC system and in particular at the separating device, if such process is performed rapidly. Such flow rate variation or pressure pulsation can damage HPLC devices, such as the stationary phase at the separating device or at parts of the valve, e.g. the valve seals. According to embodiments of the invention, the switching process can be carried out smoothly by moving the valve members sufficiently slowly, such that the flow restriction within an initial period of time after coupling is sufficiently high, e.g. to smoothly pressurize the sample loop before switching between the fluid delivery system and the separating device. The flow rate variations and/or pulses, e.g. when switching the non-pressurized sample loop between the fluid delivery system and the separating device, can be reduced or even be avoided. Thereto, a pressure or flow rate can be measured e.g. at the fluid delivery system and/or the separating device. The movement of the first valve can be controlled in dependency on the measured pressure.

In a further embodiment, a two-valve HPLC system is provided that can comprise two sample introduction paths being alternately coupled in-between the fluid passage between the fluid delivery system and the separating device. Thereto, a second valve is provided that comprises a second fluid path, a fifth port, a sixth port, and a seventh port. The second valve can be moved from a state, wherein the third fluid path couples the fifth port with the sixth port, to a state wherein third fluid path couples the fifth port with the seventh port. Further, the first port of the first valve is coupled with the fluid delivery system, and the fifth port of the second valve is coupled with the stationary phase. The first valve and the second valve are coupled through a first and a second sample introduction path being arranged in parallel, wherein the second port is coupled to the sixth port through the first sample introduction path, and the third port is coupled to the seventh port over the second sample introduction path.

Such embodiment being fluidly symmetrical with respect to the first and second sample introduction paths may allow for a seamless processing of a plurality of sample fluids- While a first sample loop is coupled between the fluid delivery system and the stationary phase to provide a first sample inserted into a first sample loop towards the stationary phase, a second sample loop is decoupled from the fluid delivery system and the stationary phase, and coupled to a sample introduction device, e.g. for inserting a second sample fluid. An advantage of this embodiment is that each sample loop may be smoothly pressurized before being coupled to the stationary phase. A pressure or flow rate course at the stationary phase can be decoupled from pressure or flow rate variations at the sample loops and may only depend on switching characteristics of the second valve.

Embodiments of the aforedescribed arrangement may be applied in a liquid separation system comprising a separating device, such as a chromatographic column, having a stationary phase for separating compounds of a sample liquid in a mobile phase. The mobile phase is driven by the pumping apparatus. Such separation system might further comprise at least one of a sampling unit for introducing the sample fluid into the mobile phase, a detector for detecting separated compounds of the sample fluid, a fraction collector for collecting separated compounds of the sample fluid, or any other device or unit applied in such liquid separation systems.

Embodiments of the invention can be partly or entirely supported by one or more suitable software programs, which can be stored on or otherwise provided by any kind of data carrier, and which might be executed in or by any suitable data processing unit.

### DETAILED DESCRIPTION

Other objects and many of the attendant advantages of embodiments of the present invention will be readily appreciated and become better understood by reference to the following more detailed description of embodiments in connection with the accompanied drawings. Features that are substantially or functionally equal or similar will be referred to by the same reference signs.

Fig.1 schematically shows a shear valve with a first and a second shear valve member,

Fig.2 shows an example of the second shear valve member of Fig.1,

Fig.3 shows an exemplary profile of a fluid path of the second shear valve member,

Fig.4 shows exemplary microstructures within a valve surface around an exemplary port in order to improve a sealing of the valve,

Fig.5 shows a dual valve arrangement for the liquid separation system, and

Fig.6 shows a block diagram of a liquid separation system.

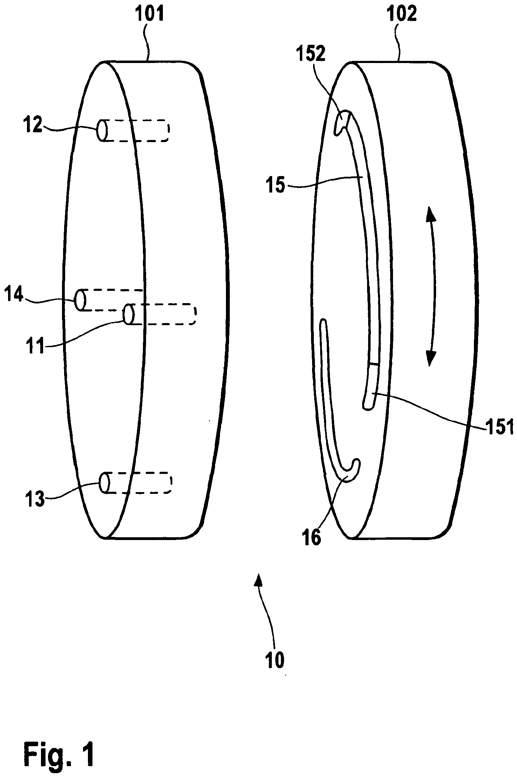

Turning to Fig. 1, a schematic diagram of a shear valve 10 is shown comprising a first shear valve member 101 and a second shear valve member 102, wherein adjacent first and second surfaces of the shear valve members are rotatably abutting to each other. The first shear valve member (or stator member) 101 comprises a first port 11, a second port 12, a third port 13, and a fourth port 14. The ports 11-14 comprise through-holes having openings that might comprise screw threads forming screwable connections arranged circularly, e.g. at equal angular distance of 90 degree, at the first surface of the first shear valve member 101. The second shear valve member (or rotor member) 102 comprises a first fluid path 15 and a third fluid path 16, each for switchably coupling selected ports of the ports 11-14. The fluid paths 15 and 16 are each implemented as indentations or grooves within the second surface of the second shear valve member 102, in the following also being referred to as first groove 15 and third groove 16. The fluid paths are moved with respect to the ports 11-14 by rotating the shear valve members 101 and 102 with respect to each other.

The rotor can pivot around a center axis being perpendicular to the stator and rotor surfaces. Depending on a relative rotation position of the second shear valve member with respect of the first shear valve member, the first and second grooves fluidly interact with one or a plurality of the ports, so that corresponding flow paths are established through the valve. The first groove 15 has a shape of a circle line segment covering, by way of example, at least 180 degrees, so that the groove has a sufficient length to simultaneously interact with three port openings. The second groove 16 has a shape of a circle line segment covering, by way of example, about 90 degree, so that this groove covers at most two port openings simultaneously.

The first groove 15 comprises, by way of example, two end sections 151 and 152, each being tapered towards its free end, and a middle section which might have a constant cross-profile between the two end sections 151 and 152.

Due to the profile along the end section 151 or 152 of the groove, a minimum cross-profile of a fluid path between the first and the second port can be varied depending on a relative position of the shear valve members to each other. Therewith, it is possible to vary the flow restriction when moving the end section over a corresponding port. Varying a flow resistance allows for smoothly increasing a flow rate or fluid pressure of a device coupled (additionally) to a fluid delivery system by means of the shear valve. Thereto, the second shear valve member might be moved sufficiently slowly within a position region, wherein the coupling between the first end section and the corresponding port starts, or in other words, wherein the corresponding port opening starts interacting with the first groove 15.

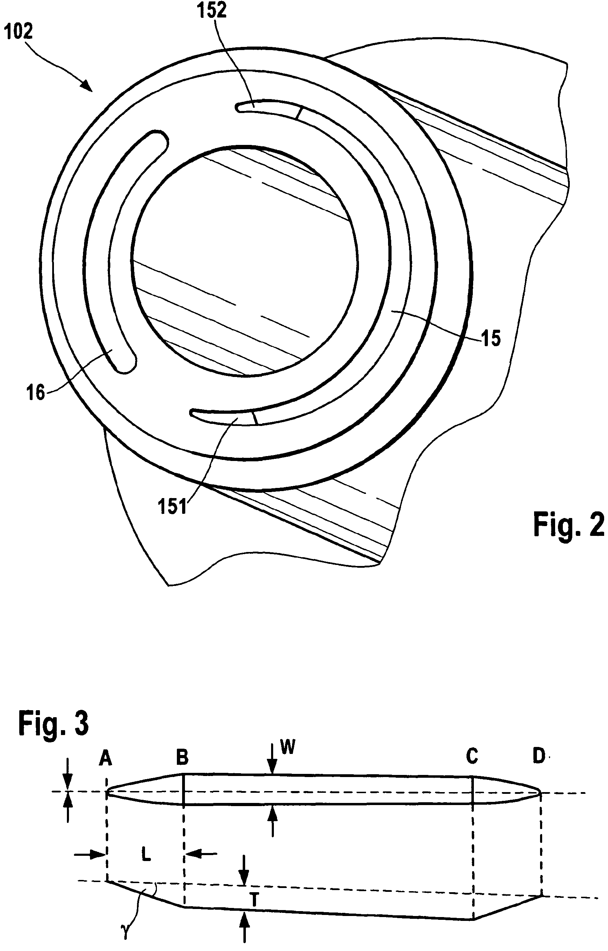

The following Figures 2 and 3 shows details of the second shear valve member 102. Fig.2 shows a photograph of a front view of the second shear valve member 102 having a tube-like front part with a surface that comprises the first groove 15 and the second groove 16. The first groove 15 forms, by way of example, a 205 degree circle line. The second groove 16, by way of example, covers a quarter circle line. By way of example, the width of the second groove 16 is greater that the width of the first groove 15. The first groove 15 comprises a middle section delimited by two end sections 151 and 152. The middle section of the first groove 15 forms, by way of example, a 165 degree circle line, and the end sections 151 and 152 might each cover 20 degree. Whereas the middle section has a constant cross section having, by way of example, a shape of a half-circle excavated into the surface 1011, the end sections each show a cone-like form tapering towards the free end points of the first groove 15. This allows for providing small dip or profile angles of the groove at the free end points with respect to the directions of movement, as being described in more detail under Fig.3.

As discussed above, the areas around the free end points A or D are critical areas with respect to sealing, as these areas are moved many times across respective ports. If the material of the member comprising the ports (e.g. the stator member) is chosen of more flexible material regarding the other member, such material might be partially pressed into the grooves of the second member.

Fig.3 shows a beveled or smooth-ended groove-formed first fluid path in order to reduce wear effects described above. The groove-formed first fluid path, in the following also being referred to as first groove 15, schematically shows an exemplary depth profile showing a depth over length. Between first free end point A and first inner end point B, the depth increases up to a maximum depth T. By way of example, both the depth and the width increase substantially linearly between the first free end point A and the first inner point B, and correspondingly linearly decrease between the second inner point C and the second free end point D respectively. Between the first inner end point B and the second inner end point C, the depth remains constant at the maximum depth T, and the width remains constant at the maximum width W.

The maximum depth T might be in the range between 0.05 -1 mm, e.g. 0.15 mm. The maximum width W might be in the range between 0.1 -1 mm, e.g. 0.3 mm. The total length of the groove might be in the range of 2- 20 mm, e.g. 7.5 mm, whereof the length L of the end section(s) is by way of example 0.8 mm.

A profile angle γ is depicted that is dependent of the length L of an end section (sections A-B or C-D) and the maximum depth T. As being indicated in Fig.3, the profile angle γ is significantly smaller than a corresponding angle of the second groove 16 (that might show 90 degree). In an embodiment, this angle might be below 15 degree, e.g. 9 degree.

Rigid sealing members under high sealing force have a narrow sealing barrier. Differently, a combination of a rigid valve member and a flexible valve member results in a surface or areal expanded sealing barrier. The pressure drops from source pressure to zero according to the fluid resistance along the contact area of the sealing members. In order to enhance the angular resolution (and therewith to enhance the predictability and the accuracy) of the fluid resistance along the switching direction of the valve, the sealing barrier can be designed to be further expanded.

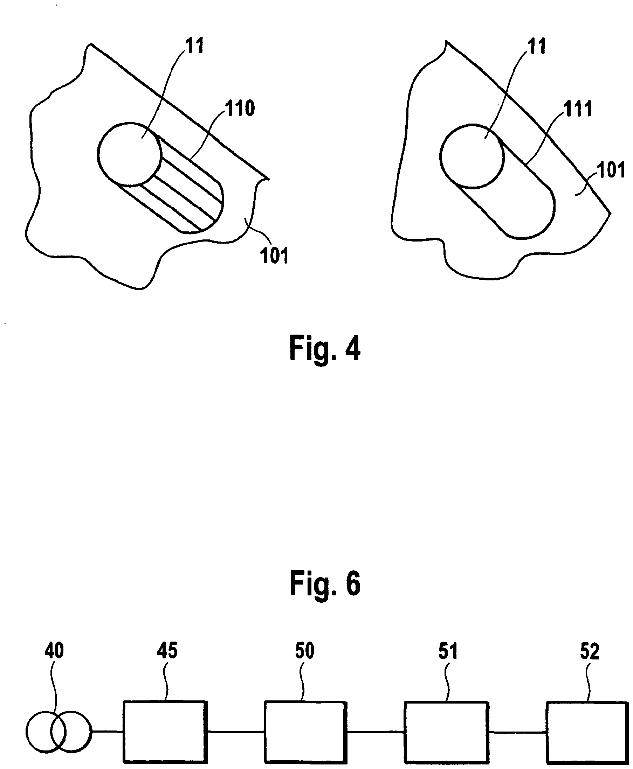

Fig.4 shows exemplary embodiments with structures for enhancing or stretching the sealing barrier in a defined way. On the left side, Fig.4 shows a plurality of micro-channels 110 at the surface of the first shear valve member 101exemplarily extending from the first port 11 in direction of the valve movement. The number of micro-channels might e.g. be chosen between 5 and 50. The micro-channels might be designed as grooves or indentations having a depth and a width between 1 and 10 µm. The right side of Fig. 4 shows an embodiment with an area 111 of enhanced structure roughness with respect to the remaining surface, exemplarily in the vicinity of the first port 11.

In a further embodiment, alternatively or additionally a porous interface layer is inserted closely to or around the first port 11.

In a further embodiment, within the vicinity of the first and/or the third port, an elastic, e.g. spring-loaded, sealing barrier at the first shear valve member is integrated to expand the fluid resistance along the switching direction of the valve. The elastic sealing barrier can be realized e.g. by a thin (e.g. 10 to 300 µm in thickness) rigid film (e.g. metals, ceramics, diamond) belonging to the first shear valve member as contact member to the second shear valve member, supported by an elastic layer e.g. an polymeric material (e.g. 0.01 mm to 5 mm in thickness) belonging to the first shear valve member too.

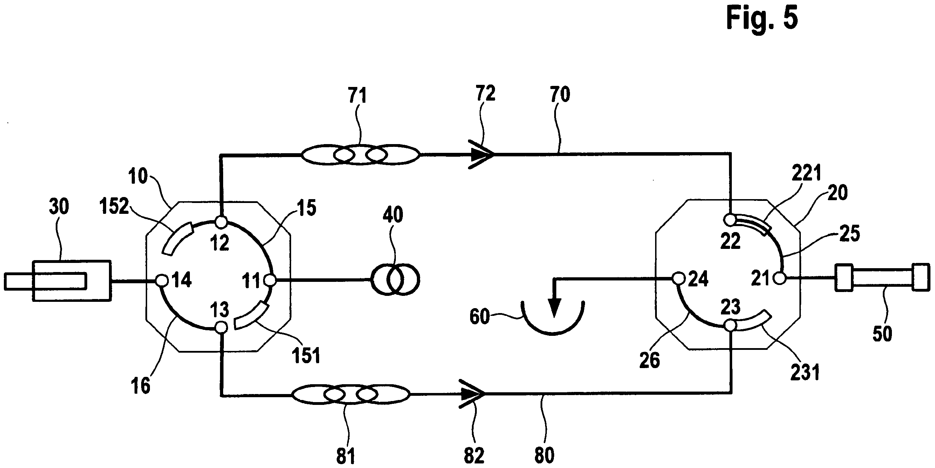

Turning to Fig.5, an exemplary block diagram of a valve arrangement to be provided to an HPLC system, as described above, is shown. The valve arrangement comprises the shear valve 10 of Fig.1, a second shear valve 20, a first sample introduction path 70, and a second sample introduction path 80. The second valve 20 comprises a second fluid path 25, a fourth fluid path 26, a fifth port 21, a sixth port 22, a seventh port 23, and an eighth port 24. The first sample introduction path 70 connects the second port 12 and the sixth port 22, and the second sample introduction path 80 connects the third port 13 and the seventh port 23.

Further, Fig.5 shows a metering device 30, a fluid delivery system or pump 40, a separation column 50, and a fluid outlet 60. The fourth port 14 is coupled to the metering device 30, and the eighth port 24 is coupled to the fluid outlet 60. The first sample introduction path 70 comprises a first sample loop 71 and a first needle arrangement 72 adapted for introducing the sample fluid into the mobile phase. The second sample introduction path 80 comprises a second sample loop 71 and a second needle arrangement 82 adapted for introducing sample fluids into the mobile phase.

Similar to the first valve 10, the second valve 20 is, by way of example, a 4-port valve comprising a second stator member and a second rotor member, wherein the openings of the ports 21- 24 are distributed at equal distances of 90 degree on a circle line. Further, a first and a second stator groove 221 and 231 extending from the opening of the sixth port 22 and the opening of seventh port 23 respectively in direction of the opening of the fifth port 21 are shown. By way of example the stator grooves 221 and 231 cover each about 40-50 degree of a circle line. The second and fourth (rotor) grooves 25 and 26, by way of example, form quarter circle lines provided symmetrically with respect to the pivot axis.

In a first alternative, a sum of the angles covered by the stator grooves and the rotor groove is below the connecting angle between port 22 and port 23, e.g. below 180 degree, if these ports are arranged at 180 degree as shown in Fig.5. Therein, the stator groove 25 might cover 90 degree, and the stator grooves 221 and 231 might cover less than 45 degree. Correspondingly, the rotor groove 25 never couples to both the first and second stator groove at the same time. At an exemplary position shown in Fig.5, there is a first gap between the first stator groove 221 and the rotor groove 25, and a second gap between the second stator groove 231 and the rotor groove 25.

In a second alternative, the sum of the angles covered by the stator grooves and the rotor groove exactly corresponds to the connecting angle between port 22 and port 23, e.g. equals exactly 180 degree according to the above example. Therein, the stator grooves 221 and 231 might cover 45 degree, and the rotor groove 25 might cover 90 degree. Correspondingly, the cut-off time is zero, and a pressure at the separation column loss is at least substantially avoided.

In a third alternative, the sum of the angles covered by the stator grooves and the rotor groove is greater than the connecting angle between port 22 and port 23, e.g. greater than1 80 degree according to the above example. Therein, the stator grooves 221 and 231 might cover more that 45 degree, and the rotor groove 25 might cover 90 degree. In this alternative, the fifth port 21, the sixth 22, and seventh port 23 are coupled altogether in an intermediate switching state. In this alternative, the fluid delivery system is always fluidly coupled to the separation column 50, and both fluid paths are supported in parallel for a short time.

The sample loops 71 and 81 might be implemented as so-called split loops, wherein corresponding needles 72 or 82 are adapted to be decoupled from a respective needle seat to be inserted into vials (not shown) each comprising sample fluid. Alternatively, such sample loops might be implemented as so-called fixed loops. In a corresponding sample introduction state, the first valve 10 can be switched to couple the metering device 30 over the fourth port 14, the third fluid path 16, the third port 13, and the second sample loop 81 to the second needle 82, while the first sample loop 71 is coupled over the first port 11, the first groove 15, and the second port 12 to the fluid delivery system 40 for delivering the sample fluid to the separation column. Now, the metering device 30 might suck a controlled amount of sample fluid into the second sample loop 81. The sample loop might be partially or completely filled up with the sample fluid. After finishing the sample introduction, the needle is discharged from the vial and positioned into the needle seat in order to provide a fluid coupling between the first valve 10 and the second valve 20 over the second sample loop 81, after having decoupled the first sample loop 71 from the fluid delivery system and the separation column. The sample loop might be realized as capillary having an inner diameter of e.g. 0.1 - 0.5 millimeter. Depending on the length of the capillary, the loop might have a sample fluid volume in a rage between 1 microliter and1 milliliter.

In the following, an exemplary mode of operation of the valve arrangement will be described.

In an arbitrary initial step, the first valve is positioned such that the first fluid path 15 is connecting the first port 11 with the second port 12, the third fluid path 16 is connecting the third port 13 with the fourth port 14, and the second valve is moved such that the third fluid path 16 connects the third port 13 with the fourth port 14, the second fluid path 25 connects the fifth port 21 with the sixth port 22, and the fourth fluid path 26 connects the seventh port 23 with the eighth port 24. The fluid delivery system 40 therein is coupled with the separation column 50 over the first sample introduction path (sample loop 71). The first sample fluid placed into the first sample loop 71 is provided to the separation column 50 under high pressure. Further, the metering device 30 is coupled to the second sample introduction path comprising the second sample loop 81 and the second needle arrangement 82 for inserting a second sample fluid into the second sample loop 81. Before such insertion, the second sample introduction path (sample loop 81 and second needle arrangement 82) might be cleaned up by driving a solvent fluid through said loop to the waste 60 coupled to the eighth port 24.

In a further step, the first valve is moved to decouple the third port 13 from the third fluid path 16 and coupled to the first fluid path 15. The pressure in the second sample loop 81 rises moderately up to system pressure. The first sample loop 71 is still coupled between the fluid delivery system 40 and the separation column 50 delivering the first sample fluid towards the separation column.

In a further step, the second valve is moved such that the second fluid path 25 is symmetrically positioned between the sixth port 22 and the seventh port 23. If the stator grooves 221 and 231 are designed to cover less than 45 degree while the rotor groove covers 90 degree, the fifth port 21 is (short-time) fluidly decoupled from both the sixth port 22 and the seventh port 23 during this step. Both sample introduction paths are coupled to the fluid delivery system and thus under pressure, but both paths are decoupled from the separation column. Corresponding to the description above, the cut-off time depends on the angular moving speed of the second valve and the angular difference between 180 degree and the sum of the angles covered by the each of the rotor grooves and the stator groove.

In a further step, the first valve is moved to decouple the first fluid path 15 from the second port 12, and the second valve is moved to decouple the sixth port 22 from the second fluid path 25. Therewith, the first sample introduction path is decoupled from both the fluid delivery system and the separation column, and the second insertion path is coupled between the fluid delivery system and the separation column to deliver the second sample fluid towards the separation column.

In a further step, the second valve is moved into a position wherein the fourth fluid path 26 couples the sixth port 22 with the eighth port 24. The pressure of the first sample introduction path releases over the eighth port 24 to the fluid outlet 60. The first sample introduction path might be subsequently cleaned-up up by pumping wash solvent(s) through this path towards the fluid outlet 60 coupled to the eighth port 24, while the third fluid path 16 is coupling the second port 12 with the fourth port 14.

In a further step, the first needle arrangement 72 might be decoupled for drawing a third sample. In further steps not being described in details here, the first and second valve are counter-clockwise moved back corresponding to previously described steps in order to set again the first sample introduction path into operation, while decoupling the second sample introduction path from the column.

As the sample introduction paths of the valve arrangement according to Fig. 5 are coupled between the first and second valves and thus downstream of the first valve, the first valve (solvent support valve) only "sees" and supports a flow of the mobile phase before sample introduction and therefore does not get in contact with any sample fluid. Thus, any fluid dead volume (i.e. a volume in which fluid does not flow with the stream, e.g. at the end sections of the first fluid path) within the first valve cannot accumulate any sample fluid, which might lead to contamination or sample cross-over likely to distort measurements. Therewith, the first fluid path 15 can be designed having a sufficient length (or excess length) to couple three ports altogether during a switch transition.

The profiled, e.g. tapered, end sections 151 and 152 allow for varying a flow resistance between the fluid delivery system 40 and the first or second sample loops 71 or 81, depending on the switching state of the first valve. Thereto, the rotor member of the first valve 10 might be moved sufficiently slowly between a first position, where a coupling between the first end section 151 and the third port starts, i.e. if turning the rotor member clock wisely, the second free end point D reaches the opening of the third port 13, and a second position wherein the flow resistance remains constant, i.e. if the second inner end point C reaches the opening of the third port 13. This allows for smoothly increasing the fluid pressure onto the sample loops 71 and 81 after the sample introduction and thus for reducing pressure or flow rate variations at the fluid delivery system 40 coupled to the first port 11. In an embodiment, the movement of the first valve is controlled in dependency on a fluid pressure or flow rate measured at the fluid delivery system. Thereto, the movement might be temporarily stopped or even reversed, if parameters of the measured pressure or flow rate variations exceed certain values; e.g. an absolute minimum pressure and/or a maximum pressure, a pressure variation and/or a pressure gradient (i.e. a derivative of the pressure over time). Depending on the system pressure, the compression volume, and the flow resistance, the time for reaching the system pressure might be in a range between a fraction of a second and some minutes. Therewith, the switching or transition time might be in the same range.

Fig. 6 shows a liquid separation system 100. A pump 40 drives a mobile phase through a separating device 50 (such as a chromatographic column) comprising a stationary phase. A sample introduction device 45 for inserting a sample fluid is switchably coupled in-between the pump 40 and the separating device 50 by means of one or a plurality of valves; such insertion device 45 can be designed according to the valve arrangement of Fig.5. The stationary phase of the separating device 50 is adapted for separating compounds of the sample liquid. A detector 51 is provided for detecting separated compounds of the sample fluid. A fraction collector 52 can be provided for collecting separated compounds of the sample fluid.

Further details of such liquid separation system are disclosed with respect to the Agilent 1200 Series Rapid Resolution LC system or the Agilent 1100 HPLC series, both provided by the applicant Agilent Technologies, under www.agilent.com.

## Claims

1. A shear valve (10), comprising:
a first shear valve member (101) comprising a first port (13) and a second port (12), and
a second shear valve member (102) adapted to be moved with respect to the first shear valve member (101), and comprising a first fluid path (15) fluidly coupling the first port (13) and the second port (12) in dependency on a relative movement position of the second shear valve member (102) with respect to the first shear valve member (101),
wherein the first fluid path (15) comprises a first section (151) having a variable profile to provide a variable flow resistance being varied when moving the second shear valve member (102) with respect to the first shear valve member (101) within a certain region of the relative movement position,
**characterized in that** the first fluid path (15) comprises a second section (152) having a variable profile, and the first and the second sections (151, 152) are connected through a third section having a constant cross sectional area.

2. The valve of claim 1, wherein the first fluid path (15) comprises a groove, and the first port (13) and the second port (12) comprise through-holes having openings fluidly coupling with the groove dependent on the moving position.

3. The valve of claim 1 or 2, wherein the first section (151) has a variable cross-sectional area.

4. The valve of any one of the above claims, wherein the first section (151) has a variation of at least one of a depth and a width.

5. The valve of the preceding claim, wherein at least one of the depth and the width continuously decreases from a first end (B, C) of the first section (151) towards a second end (A, D) denoting an end of the first fluid path (15).

6. The valve of any one of the above claims, wherein a length of the first section (151) is one of: at least twice as long and at least thrice as long as a maximum width of the first profiled end section (151).

7. The valve of any one of the above claims, wherein a profile angle of the first section (151) of the first fluid path (15) with respect to a surface of the second shear valve member (102) is below 90 degree, preferably below 10 degree.

8. The valve of any one of the above claims, wherein a surface of the first shear valve member has a defined structure in the vicinity of the first port (13), preferably being implemented as at least one of: a plurality of microchannels (110) extending from the first port (13) and an area with an enhanced roughness compared to a roughness of the remaining surface in the vicinity of the first port (13).

9. The valve of any one of the above claims, comprising a valve control unit adapted for controlling a movement of the second shear valve member (102) with respect to the first shear valve member (101) in dependency on a state of a fluid being in communication with the first port (13).

10. The valve of the preceding claim, wherein the state is a pressure or flow rate of the fluid at the first port (13), and the valve control unit is adapted for controlling the movement such that at least one of the pressure, flow rate, a variation of the pressure or a variation of the flow rate, a pressure gradient, and a flow rate gradient is kept within certain limits.

11. The valve of any one of the above claims, being adapted to operate at a fluid pressure within one of the following ranges: 100 - 2000 bar, 200 - 1500 bar, and 600 - 1200 bar.

12. The valve of any one of the above claims, wherein the first shear valve member (101) and the second shear valve member (102) are rotatably movable with respect to each other.

13. A high performance liquid chromatography system, comprising:
a valve (10) in accordance with any one of the above claims,
a separating device (50) comprising a stationary phase for separating compounds of a sample fluid comprised in a mobile phase, and
a fluid delivery system (40) adapted for driving a mobile phase through the separating device,
wherein the first port (13) and the second port (12) of the valve (10) are coupled in-between a fluid passage between the fluid delivery system (40) and the separating device (50) for providing a fluid connection between the fluid delivery system (40) and the separating device (50).

14. The chromatography system of the preceding claim, further comprising:
a second valve (20) comprising a second fluid path (25), a fifth port (21), a sixth port (22), and a seventh port (23), wherein the second valve (20) is adapted to move the second fluid path (25) from a fourth state wherein the fifth port (21) is coupled with the sixth port (22), to a fifth state wherein the fifth port (21) is coupled with the seventh port (23), and
wherein the first port is coupled with the fluid delivery system (40), the fifth port (21) is coupled to the stationary phase (50), the second port (12) is fluidly coupled to the sixth port (22) and the third port (13) is fluidly coupled over a sample introduction path (70, 80) to the seventh port (23).

## Patentansprüche

1. Ein Scherrventil (10) aufweisend:
ein erstes Scherrventilelement (101), das einen ersten Anschluss (13) und einen zweiten Anschluss (12) aufweist, und
ein zweites Scherrventilelement (102), das eingerichtet ist, um in Bezug zu dem ersten Scherrventilelement (101) bewegt zu werden, und das einen ersten Fluidpfad (15) aufweist, der fließbar den ersten Anschluss (13) und den zweiten Anschluss (12) in Abhängigkeit von einer relativen Bewegungsposition des zweiten Scherrventilelements (102) in Bezug zu dem ersten Scherrventilelement (101) gekoppelt,
wobei der erste Fluidpfad (15) einen ersten Abschnitt (151) aufweist, der ein variables Profil hat, um einen variablen Flusswiderstand bereitzustellen, der variiert wird, wenn das zweite Scherrventilelement (102) in Bezug zu dem ersten Scherrventilelement (101) innerhalb eines bestimmten Bereich der relativen Bewegungsposition bewegt wird,
**dadurch gekennzeichnet, dass** der erste Fluidpfad (15) einen zweiten Abschnitt (152) aufweist, der ein variables Profil hat, und der erste und der zweite Abschnitt (151, 152) durch einen dritten Abschnitt hindurch verbunden sind, der eine konstante Querschnittsfläche hat.

2. Das Ventil gemäß Anspruch 1,
wobei der erste Fluidpfad (15) eine Nut aufweist, und der erste Anschluss (13) und der zweite Anschluss (12) Durchgangslöcher aufweisen, die Öffnungen haben, die abhängig von der Bewegungsposition fließbar mit der Nut koppeln.

3. Das Ventil gemäß Anspruch 1 oder 2,
wobei der erste Abschnitt (151) eine variable Querschnittsfläche hat.

4. Das Ventil gemäß irgendeinem der oben genannten Ansprüche,
wobei der erste Abschnitt (151) eine Variation von zumindest einem von einer Tiefe und einer Breit hat.

5. Das Ventil gemäß dem vorangehenden Anspruch,
wobei zumindest einer von der Tiefe und der Breite kontinuierlich von einem ersten Ende (B, C) des ersten Abschnitts (151) in Richtung einem zweiten Ende (A, D) abnimmt, welches zweite Ende ein Ende des ersten Fluidpfades (15) bezeichnet.

6. Das Ventil gemäß irgendeinem der oben genannten Ansprüche,
wobei eine Länge des ersten Abschnitts (151) eine ist von: zumindest doppelt so lang und zumindest dreimal so lang wie eine maximale Breite des ersten profilierten Endabschnitts (151).

7. Das Ventil gemäß irgendeinem der oben genannten Ansprüche,
wobei ein Profilwinkel des ersten Abschnitts (151) des ersten Fluidpfades (15) in Bezug zu einer Oberfläche des zweiten Scherrventilelements (102) kleiner als 90 Grad, bevorzugt kleiner als 10 Grad, ist.

8. Das Ventil gemäß irgendeinem der oben genannten Ansprüche,
wobei eine Oberfläche des ersten Scherrventilelements eine definierte Struktur in der Nähe des ersten Anschlusses (13) hat, die bevorzugt als zumindest eine implementiert ist von: einer Mehrzahl von Mikrokanälen (110), die sich von dem ersten Anschluss erstrecken und eine Fläche mit einer erhöhten Rauheit im Vergleich zu einer Rauheit der verbleibenden Oberfläche in der Nähe des ersten Anschlusses (13).

9. Das Ventil gemäß irgendeinem der oben genannten Ansprüche, welches eine Ventilsteuereinheit aufweist, die eingerichtet ist, zum Steuern einer Bewegung des zweiten Scherrventilelements (102) in Bezug zu dem ersten Scherrventilelement (101) in Abhängigkeit von einem Zustand eines Fluids ist, das in Kommunikation mit dem ersten Anschluss (13).

10. Das Ventil gemäß dem vorangehenden Anspruch,
wobei der Zustand ein Druck oder eine Flussrate des Fluids an dem ersten Anschluss (13) ist und die Ventilsteuereinheit zum Steuern einer Bewegung eingerichtet ist, so dass zumindest eine von dem Druck, der Flussrate, einer Variation des Drucks oder einer Variation der Flussrate innerhalb bestimmter Grenzen gehalten wird.

11. Das Ventil gemäß irgendeinem der oben genannten Ansprüche, welches eingerichtet ist, um bei einem Fluiddruck zu arbeiten innerhalb einem der folgenden Bereiche: 100 -2000 bar, 200 - 1500 bar und 600 - 1200bar.

12. Das Ventil gemäß irgendeinem der oben genannten Ansprüche,
wobei das erste Scherrventilelement (101) und das zweite Scherrventilelement (102) drehbar bewegbar im Bezug zueinander sind.

13. Ein Hochleistungsflüssigkeitschromatographiesystem aufweisend:
ein Ventil (10) gemäß irgendeinem der oben genannten Ansprüche,
ein Separiergerät (50), welches eine stationäre Phase zum Separieren von Gemischen eines Probenfluids aufgewiesen in einer beweglichen Phase aufweist, und
ein Fluidauslieferungssystem (40), welches zum Treiben einer beweglichen Phase durch das Separiergerät hindurch eingerichtet ist,
wobei der erste Anschluss (13) und der zweite Anschluss (12) des Ventils (10) zwischen einem Fluiddurchgang zwischen dem Fluidauslieferungssystem (40) und dem Separiergerät (50) zum Bereitstellen einer Fluidverbindung zwischen dem Fluidauslieferungssystem (40) und dem Separiergerät (50) gekoppelt sind.

14. Das Chromatographiesystem gemäß dem vorangehenden Anspruch, ferner aufweisend:
ein zweites Ventil (20), das einen zweiten Fluidpfad (25), einen fünften Anschluss (21), einen sechsten Anschluss (22) und einen siebten Anschluss (23) aufweist, wobei das zweite Ventil (20) eingerichtet ist, um den zweiten Fluidpfad (25) von einem vierten Zustand, wobei der fünfte Anschluss (21) mit dem sechsten Anschluss (22) gekoppelt ist, zu einem fünften Zustand zu bewegen, wobei der fünfte Anschluss (21) mit dem siebten Anschluss (23) gekoppelt ist, und
wobei der erste Anschluss mit dem Fluidauslieferungssystem (40) gekoppelt ist, der fünften Anschluss (21) an der stationären Phase (50) gekoppelt ist, der zweite Anschluss (12) fliessbar an dem sechsten Anschluss (22) gekoppelt ist und der dritte Anschluss (13) fliessbar über einem Probeneinleitungspfad (70, 80) an dem siebten Pfad gekoppelt ist.

## Revendications

1. Vanne à guillotine (10), comprenant :
un premier élément de vanne à guillotine (101) comprenant un premier orifice (13) et un deuxième orifice (12), et
un second élément de vanne à guillotine (102) adapté pour être déplacé par rapport au premier élément de vanne à guillotine (101), et comprenant un premier trajet de fluide (15) accouplant de façon fluidique le premier orifice (13) et le deuxième orifice (12) en fonction d'une position de mouvement relatif du second élément de vanne à guillotine (102) par rapport au premier élément de vanne à guillotine (101),
dans laquelle le premier trajet de fluide (15) comprend une première section (151) possédant un profil variable pour fournir une résistance à l'écoulement variable, variée lors du déplacement du second élément de vanne à guillotine (102) par rapport au premier élément de vanne à guillotine (101) au sein d'une certaine région de la position de mouvement relatif,
**caractérisée en ce que** le premier trajet de fluide (15) comprend une deuxième section (152) possédant un profil variable, et les première et deuxième sections (151, 152) sont raccordées par l'intermédiaire d'une troisième section possédant une superficie de section transversale constante.

2. Vanne selon la revendication 1, dans laquelle le premier trajet de fluide (15) comprend une rainure, et le premier orifice (13) et le deuxième orifice (12) comprennent des trous débouchants possédant des ouvertures s'accouplant de façon fluidique avec la rainure en fonction de la position de mouvement.

3. Vanne selon la revendication 1 ou 2, dans laquelle la première section (151) possède une superficie de section transversale variable.

4. Vanne selon une quelconque des revendications précédentes, dans laquelle la première section (151) comporte une variation d'une profondeur et/ou d'une largeur.

5. Vanne selon la revendication précédente, dans laquelle la profondeur et/ou la largeur diminue continuellement à partir d'une première extrémité (B, C) de la première section (151) vers une seconde extrémité (A, D) dénotant une extrémité du premier trajet de fluide (15).

6. Vanne selon une quelconque des revendications précédentes, dans laquelle une longueur de la première section (151) est au moins deux fois aussi longue ou au moins trois fois aussi longue qu'une largeur maximum de la première section à extrémité profilée (151).

7. Vanne selon une quelconque des revendications précédentes, dans laquelle un angle de profil de la première section (151) du premier trajet de fluide (15) par rapport à une surface du second élément de vanne à guillotine (102) est inférieur à 90 degrés, de préférence inférieur à 10 degrés.

8. Vanne selon une quelconque des revendications précédentes, dans laquelle une surface du premier élément de vanne à guillotine comporte une structure définie dans le voisinage du premier orifice (13), de préférence réalisée sous forme de pluralité de micro-canaux (110) s'étendant à partir du premier orifice (13) et/ou de zone avec une rugosité améliorée par rapport à une rugosité de la surface restante dans le voisinage du premier orifice (13).

9. Vanne selon une quelconque des revendications précédentes, comprenant une unité de commande de vanne adaptée pour commander un mouvement du second élément de vanne à guillotine (102) par rapport au premier élément de vanne à guillotine (101) en fonction d'un état d'un fluide en communication avec le premier orifice (13).

10. Vanne selon la revendication précédente, dans laquelle l'état est une pression ou un débit du fluide au premier orifice (13), et l'unité de commande de vanne est adaptée pour commander le mouvement de sorte que la pression et/ou le débit et/ou une variation de la pression ou une variation du débit et/ou un gradient de pression et/ou un gradient de débit soit maintenu au sein de certaines limites.

11. Vanne selon une quelconque des revendications précédentes, adaptée pour fonctionner à une pression de fluide au sein d'une des plages suivantes : 100 à 2000 bars, 200 à 1500 bars, et 600 à 1200 bars.

12. Vanne selon une quelconque des revendications précédentes, dans laquelle le premier élément de vanne à guillotine (101) et le second élément de vanne à guillotine (102) sont mobiles de façon rotative l'un par rapport à l'autre.

13. Système de chromatographie liquide à haute performance, comprenant :
une vanne (10) selon une quelconque des revendications précédentes,
un dispositif de séparation (50) comprenant une phase stationnaire pour séparer des composés d'un fluide échantillon compris dans une phase mobile, et
un système de distribution de fluide (40) adapté pour entraîner une phase mobile à travers le dispositif de séparation,
dans lequel le premier orifice (13) et le deuxième orifice (12) de la vanne (10) sont accouplés entre un passage de fluide entre le système de distribution de fluide (40) et le dispositif de séparation (50) pour fournir un raccord fluidique entre le système de distribution de fluide (40) et le dispositif de séparation (50).

14. Système de chromatographie selon la revendication précédente, comprenant en outre :
une seconde vanne (20) comprenant un second trajet de fluide (25), un cinquième orifice (21), un sixième orifice (22), et un septième orifice (23), dans lequel la seconde vanne (20) est adaptée pour déplacer le second trajet de fluide (25) d'un quatrième état dans lequel le cinquième orifice (21) est accouplé avec le sixième orifice (22), à un cinquième état dans lequel le cinquième orifice (21) est accouplé avec le septième orifice (23), et
dans lequel le premier orifice est accouplé avec le système de distribution de fluide (40), le cinquième orifice (21) est accouplé avec la phase stationnaire (50), le deuxième orifice (12) est accouplé de façon fluidique avec le sixième orifice (22) et le troisième orifice (13) est accouplé de façon fluidique sur un trajet d'introduction d'échantillon (70, 80) avec le septième orifice (23).
